# EUROPEAN PATENT SPECIFICATION

(11) **EP 2 493 126 B1**
(45) Date of publication and mention of the grant of the patent: **17.08.2016**
(21) Application number: 10791454.1
(22) Date of filing: 08.06.2010
(51) Int. Cl.: H04J 3/06

(54) **METHOD AND SYSTEM FOR CLOCK RECOVERY IN PACKET SWITCHED NETWORK**
VERFAHREN UND SYSTEM ZUR TAKTWIEDERHERSTELLUNG IN EINEM PAKETVERMITTELTEN NETZ
PROCÉDÉ ET SYSTÈME PERMETTANT UNE RÉCUPÉRATION D'HORLOGE DANS UN RÉSEAU À COMMUTATION DE PAQUETS

(30) Priority: 23.11.2009 CN 200910222940
(43) Date of publication of application: 29.08.2012
(73) Proprietor: ZTE Corporation, Shenzhen, Guangdong 518057 (CN)
(72) Inventor: XU, Xiaohui, Shenzhen Guangdong 518057 (CN)
(74) Representative: Krauns, Christian
(86) International application number: PCT/CN2010/073672
(87) International publication number: WO 2010/148948

(56) References cited:
- CN-A- 1 852 087
- CN-A- 101 719 867
- US-A- 6 167 048
- US-A1- 2005 243 625
- US-A1- 2007 054 643
- US-A1- 2007 097 902
- US-A1- 2008 080 567
- US-B1- 7 176 928

## Description

### Technical Field

The present invention relates to the field of communication technology, and in particular, to a method and system for clock recovery in a packet-switched network.

### Background Art

The packet-switched network is widely used since it has the advantages of low price, flexible protocol, mature technology and so on. It has been attempted to transmit many real-time services, such as IP phone, TDM (Time Division Multiplexing) circuit simulation service and the like, on the packet-switched network. The next-generation network is a network that is based on packet switching and meanwhile needs to carry services such as voice, video and data, and the current voice service is mostly transmitted by TDM. It has become a necessary demand currently that the packet-switched network, such as an Ethernet, is used to transmit TDM services, and how to achieve seamless connection between the packet-switched network and the existing TDM network is also a core problem for the service.

Since the packet-switched network adopts the asynchronous transmission mode, but the TDM service requires terminal-to-terminal clock synchronization, it is required that the clock of the receiving terminal be consistent with the clock of the transmitting terminal. When the clock of the receiving terminal and the clock of the transmitting terminal are not taken from the same public clock synchronous network, the receiving terminal needs to extract the clock information of the transmitting terminal according to the received data packet sequence, and this process is called as clock recovery.

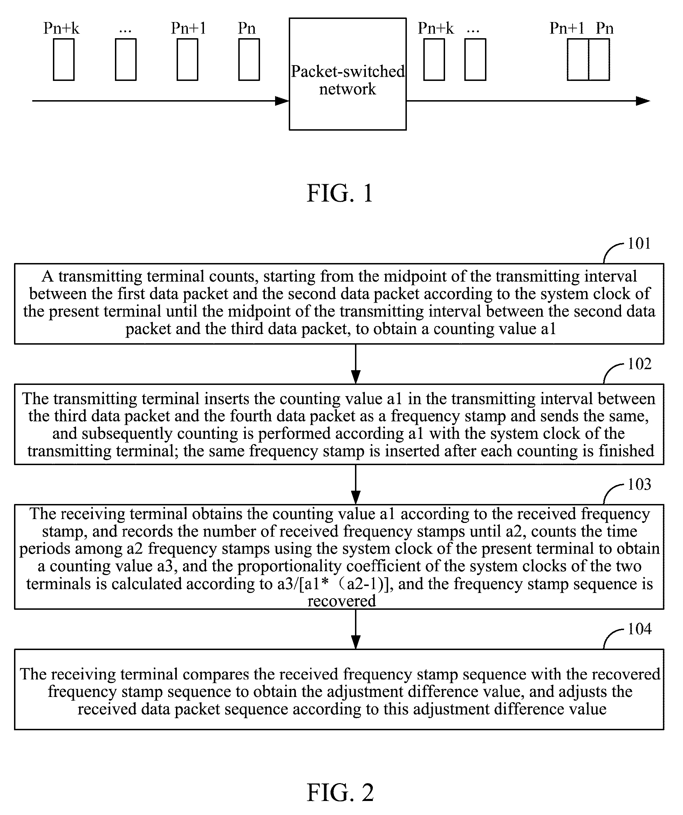

Since the packet-switched network per se is of an asynchronous transmission mode, after the continuous bit stream information of the TDM service is packet-encapsulated, de-encapsulated in the packet-switched network, and queued, switched and congested in the network, the continuity and periodicity thereof will be deteriorated, thus generating a phenomenon of packet delay jitter, which will cause large-scale packet delay, wander and jitter. Thus, the time of the real-time periodic data packet transmitted by the transmitting terminal arriving at the receiving terminal is indeterminate, which will make it difficult to recover the clock at the receiving terminal. Assuming that the packet-switched networks between the TDM transmitting terminal and the TDM receiving terminal is collectively regarded as one network node, the process of the data packet sequence being affected by the network jitter when passing through the packet-switched network is as shown in FIG. 1, wherein the rectangular data packets are evenly distributed when entering the packet-switched network, but they will be affected by the time delay when leaving the packet-switched network, and the intervals between data packets are varied, which will greatly affect the recovery of self-adaptive clock. At this moment, if the clock is recovered directly according to the time for receiving the data packet, a large fluctuation will be generated, thus influencing the quality of the received clock. The delay of network fluctuation is mainly the delay caused when the present service has to queue up because there are other services being transmitted in a switch or the like, and the former delay can be canceled out if it does not need to queue up. As can be seen, the clock cannot be accurately recovered after the TDM service data are transmitted through the packet-switched network in the prior art.

US 2007/0054643 A1 provides a receiver including a receiver clock oscillator controllable with regard to its receiver oscillator frequency, means for detecting a number of clock periods that the receiver clock oscillator performs in a specifiable period of time, means for extracting a first and a temporally following second reference entry in a received data stream, wherein means for extracting is implemented in order to control means for detecting on the basis of the extracted first and second reference entry with regard to the specifiable period of time, and means for comparing the number of clock periods of the receiver clock oscillator with the information in the second reference entry in order to control the controllable oscillator depending on a comparison result so that the oscillator frequency is increased or decreased so that the oscillator frequency is in a predetermined ratio to a frequency of the clock oscillator in the transmitter or is equal to the frequency of the clock oscillator in the transmitter.

### Summary of the Invention

In order to solve the problem in the prior art that the clock cannot be accurately recovered after the TDM service data are transmitted through the packet-switched network, the example of the present invention provides a method and system for clock recovery in a packet-switched network.

The features of the method and system according to the present invention are defined in the independent claims, and the preferable features according to the present invention are defined in the dependent claims.

In the examples of the present invention, just because of the mechanism of adding a frequency stamp respectively at the transmitting terminal and the receiving terminal simultaneously, the receiving terminal can learn the influence of the fluctuation of the network on the data packets according to the frequency stamp, and hence can accurately recover the data packet sequence of the transmitting terminal, thereby recovering the clock of the transmitting terminal according to this data packet sequence.

### Brief Description of Drawings

FIG. 1 illustrates the data packet sequence being affected by network jitter when passing through the packet-switched network;
FIG. 2 is a flowchart of the method according to the first example of the present invention;
FIG. 3 illustrates the mechanism of recovering the frequency stamp sequence according to the first example of the present invention;
FIG. 4 illustrates the mechanism of generating the frequency stamp at the transmitting terminal according to the first example of the present invention;
FIG. 5 illustrates the mechanism of processing the frequency stamp at the receiving terminal according to the first example of the present invention;
FIG. 6 illustrates the structure of the system according to the second example of the present invention.

### Preferred Embodiments of the Present Invention

In order to solve the problem in the prior art that the clock cannot be accurately recovered after the TDM service data are transmitted through the packet-switched network, this example of the present invention provides a method for clock recovery in a packet-switched network. The method provided in this example, as shown in FIG. 2, mainly comprises the following steps.

In step 101, a transmitting terminal counts, starting from the midpoint of the transmitting interval between the first data packet and the second data packet according to the system clock of the present terminal until the midpoint of the transmitting interval between the second data packet and the third data packet, to obtain a counting value a1.

In this step, the system clock of the transmitting terminal is used as the sampling clock, and of course, the clock obtained after doubling the frequency of the system clock of the transmitting terminal can also be used as the sampling clock. In this step, the counting can also be performed from the beginning of the first data packet, until the beginning of the second data packet, and no matter which counting manner is used, counting is performed for one data packet transmitting period, i.e., for the time for transmitting the data packets and the data packet transmitting interval. For example, the system clock of the transmitting terminal is Tc, counting is performed from the midpoint of the transmitting interval between the first data packet and the second data packet until the midpoint of the transmitting interval between the second data packet and the third data packet to obtain a counting value a1=6, and one data packet transmitting period is Tx=6Tc.

The data packets in this example refer to TDM service data packets.

In step 102, the transmitting terminal inserts the counting value a1 in the transmitting interval between the third data packet and the fourth data packet as a frequency stamp and sends the same, and subsequently counting is performed according a1 with the system clock of the transmitting terminal; the same frequency stamp is inserted after each counting is finished.

In this step, the counting value a1 is inserted as the frequency stamp, and the frequency stamp is substantially identification information for identifying a time period obtained by counting according to a1 with the system clock of the transmitting terminal, that is, the ratio of the inserting interval of two adjacent frequency stamps to the system clock of the transmitting terminal is the first counting value a1. Using the first counting value a1 as the frequency stamp is to send the first counting value a1 to the receiving terminal. Of course, in specific implementation, the first counting value a1 may not be sent as the frequency stamp, but identification information is inserted into the transmitting interval between the third data packet and the fourth data packet and sent, and subsequently counting is performed according a1 with the system clock of the transmitting terminal; the same identification information is inserted after each counting is finished, and the first counting value a1 is sent to the receiving terminal separately.

If the data packet transmitting period of the transmitting terminal is adjusted, for example, the data packet transmitting period is shortened, but the frequency stamp is still inserted according to the interval of a1 system clocks, then after several data packet transmitting periods, the time for sending the frequency stamp may be superposed with the time for sending the data packet, and the identification information stops to be inserted into this position. At this moment, the middle position of the data packet transmitting interval and the data packet transmitting period need to be detected again, the frequency stamp is inserted again, and the first-byte identifier is inserted in the first frequency stamp.

In step 103, the receiving terminal obtains the counting value a1 according to the received frequency stamp, and records the number of received frequency stamps until a2, counts the time periods among a2 frequency stamps is counted using the system clock of the present terminal to obtain a counting value a3, and the proportionality coefficient of the system clocks of the two terminals is calculated according to a3/[a1* (a2-1)], and the frequency stamp sequence is recovered.

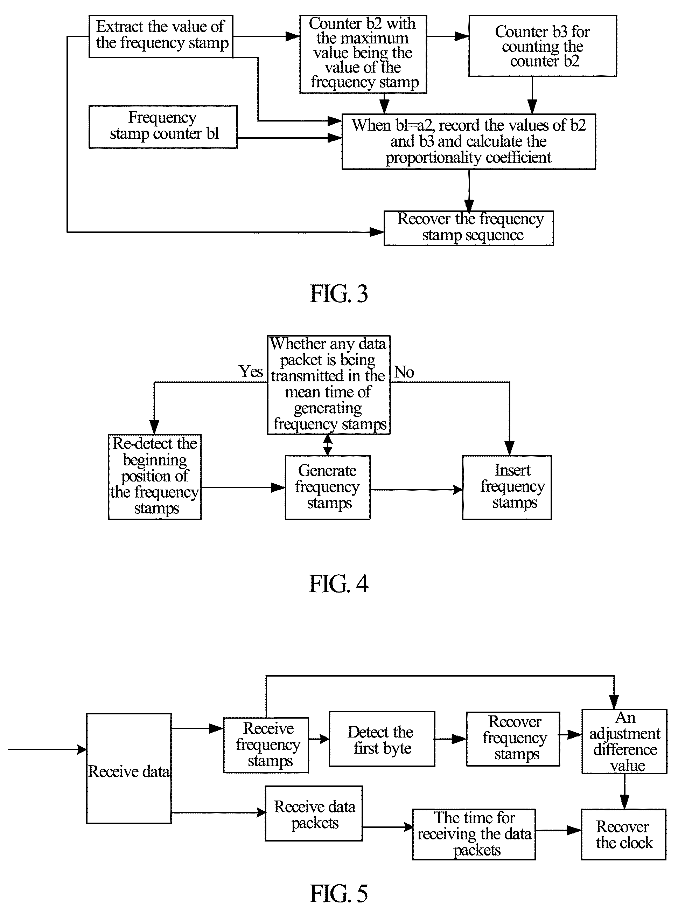

In this step, in specific implementation, a counter b1 may be provided at the receiving terminal for recording the number of received frequency stamps (counting till a2 every time, and obtaining the interval between frequency stamps), and meanwhile a counter b2 (restarting every time when counting till a1) and a counter b3 (when b1 is a2, b3 is a4, and b2 is a5) for recording the number of b2s at the receiving terminal may be also generated using the system clock of the receiving terminal, and thus the proportionality coefficient of the two system clocks can be obtained according to (a1*a4+a5)/ [a1* (a2-1)], from which it can be easily seen that a3= a1*a4+a5. Compared with counting the time periods among a2 frequency stamps directly using one counter to obtain the third counting value a3, the requirement on the maximum counting values of the counters is low when two counters are used. Its generating mechanism is as shown in FIG. 3.

In specific implementation, the proportionality coefficient may be calculated for multiple times, and the proportionality coefficient calculated each time is cached into a cache ram, and when the ram is full, the average value of all values in the ram is taken as a standard proportionality coefficient. Afterwards, an average value of the proportionality coefficient generated at each time and the standard proportionality coefficient is used as a new proportionality coefficient, according to which the frequency stamp sequence is recovered.

After the proportionality coefficient of the system clocks of the two terminals is obtained, the receiving terminal can recover the system clock of the transmitting terminal according to the local system clock, and then the interval between two adjacent frequency stamps is recovered to obtain the frequency stamp sequence according to the received counting value a1.

If the data packet transmitting period of the transmitting terminal is adjusted, frequency stamps need to be inserted again, and a first-byte identifier is inserted into the first frequency stamp. When receiving the first-byte identifier, the receiving terminal adjusts the maximum value of the counter b2 according to the new counting value a1 represented by the received frequency stamps.

In step 104, the receiving terminal compares the received frequency stamp sequence with the recovered frequency stamp sequence to obtain the adjustment difference value, and adjusts the received data packet sequence according to this adjustment difference value.

Due to the jitter caused by network delay, it is very likely that the received frequency stamp sequence does not work like the frequency stamp sequence transmitted by the transmitting terminal, the intervals between adjacent frequency stamps are a1 system clock periods of the transmitting terminal, i.e. a1 Tcs, for example 6 Tcs. Due to the network jitter, there is a difference Δt between the delay for receiving the second frequency stamp and the delay for receiving the first frequency stamp, in which case, the interval between the received first frequency stamp and the received second frequency stamp is 6Tc+Δt, where Δt is precisely the adjustment difference value. In specific implementation, the receiving terminal may store the received data packets into a cache FIFO_1, and meanwhile store the recorded receiving time into another cache FIFO_2. The receiving terminal may adjust the receiving time in FIFO_2 according to the adjustment difference value and obtain the adjusted data packet sequence, thereby obtaining the recovered clock, and transmits the data packets in the FIFO_1 using the recovered clock.

After a frequency stamp is received and when two data packets are detected continuously, it indicates that the frequency stamp of this time is over, afterwards the receiving time in FIFO_2 is adjusted directly according to the adjustment difference value obtained based on the calculated proportionality coefficient before it is over, the data packet sequence of the receiving terminal is recovered, and the above steps will be repeated again when any new frequency stamp is detected.

In order to implement the above steps, in this example, the frequency stamps are inserted at the transmitting terminal as shown in FIG. 4. When detecting the first transmitted data packet, the transmitting terminal starts to detect the midpoint of the data packet transmitting interval, and meanwhile counts the data packet transmitting periods according to the system clock and uses the counting value as a frequency stamp, and then starts to insert the frequency stamp (in this example, the frequency stamp serves does not only serve as identification information for indicating the location of the time point, but also indicate the counting value a1 obtained by counting the data packet transmitting period using the system clock). An identifier needs to be added for the first frequency stamp to indicate its primary position, and thereafter the frequency stamps are inserted directly according to the firstly detected frequency value. In the mean time of generating the frequency stamps, it needs to detect whether any data packet is being transmitted at this moment (i.e., whether the time for transmitting the frequency stamps is superposed with the time for transmitting the data packets), and if so, the inserting of frequency stamps is stopped, and the beginning position of the frequency stamps and the data packet transmitting period at this moment are detected again, new frequency stamps are inserted again according to the newly detected counting value a1 after the beginning position is detected, and the first frequency stamp identifier is inserted; if not, the inserting of the frequency stamps will be continued according to the previous inserting period.

At the receiving terminal, identification and processing for the frequency stamps need to be implemented. The processing manner is as shown in FIG. 5, wherein firstly it needs to differentiate the types of received information, which is mainly divided into two classes, namely frequency stamps and data packets, and when the first-byte identifier of the frequency stamps is detected, the proportionality coefficient of the two terminal is calculated through several counters, and finally a frequency stamp sequence is recovered according to this proportionality coefficient, the system clock of the receiving terminal and the value of the transmitted frequency stamps, and then the received frequency stamp sequence is compared with the recovered frequency stamp sequence to obtain an adjustment difference value. The time for receiving the data packets needs to be recorded to store into a FIFO, and meanwhile the data packets are stored in another FIFO. Finally, the value of the receiving time in the FIFO is adjusted according to the adjustment difference value, the data packets in another FIFO are recovered into a data packet sequence according to the recovered value, and the data packet sequence is used as the recovered clock.

In specific implementation, if continuous network jitters occur during the operation process, the receiving terminal detects the first-byte identifier of the frequency stamps, and after detecting the first-byte identifier, recovers a frequency stamp sequence according to the detection counting value a1, calculates an adjustment value according to the received frequency stamp sequence and the recovered frequency stamp sequence, determines to cache a suitable number of data packets according to the adjustment value, caches the data packets and the time for receiving the data packets respectively, recovers the data packet sequence of the transmitting terminal according to the adjustment difference value and the receiving time, and transmits the cached data packets according to the recovered data packet sequence.

If a big network jitter occurs occasionally during the operation process, the receiving terminal detects the first-byte identifier of the frequency stamps, and after detecting the first-byte identifier, recovers a frequency stamp sequence according to the detection counting value a1, calculates an adjustment value according to the received frequency stamp sequence and the recovered frequency stamp sequence, determines to cache a suitable number of data packets according to the adjustment value, caches the data packets and the time for receiving the data packets respectively, and if the received jitter is so big that it exceeds the capability for caching data packets, then an alarming indication is inserted to indicate that the network jitter is too big, the present part of service data packets are not processed, the received data packet sequence is directly inserted, and the recovered clock is not calculated and the recovered clock calculated last time is directly kept.

If there is no network jitter during the operation process, the adjustment value is calculated to be 0 according to the received frequency stamp sequence and the recovered frequency stamp sequence, the time for receiving the data packets and the data packets are cached, the clock of the transmitting terminal (i.e., the data packet sequence of the transmitting terminal) is recovered according to the receiving time for receiving data packets, and the cached data packets are transmitted according to the recovered clock.

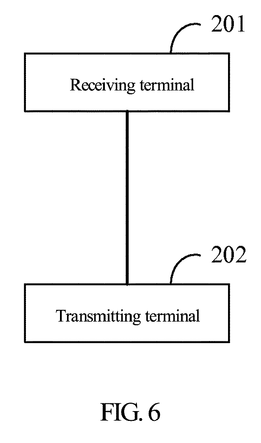

An example of the present invention also provides a system for clock recovery in a packet-switched network, which, as shown in FIG. 6, comprises:
a transmitting terminal 201, which is used to perform counting on TDM service data packet transmitting periods using a sampling clock of the present terminal to obtain a first counting value a1, wherein the data packet transmitting period comprises a time for transmitting a data packet and a data packet transmitting interval; and insert identification information between at least two continuous transmitting intervals, wherein a ratio of an inserting interval of two pieces of adjacent identification information to the sampling clock of the transmitting terminal is the first counting value a1;
a receiving terminal 202, which is used to receive the first counting value a1, calculate a proportionality coefficient between a sampling clock period of the transmitting terminal and a sampling clock period of the receiving terminal according to the first counting value a1 and the identification information, and recover an interval between the two pieces of adjacent identification information, compare the interval between the two pieces of received adjacent identification information with the recovered interval between the two pieces of adjacent identification information to obtain an adjusting difference value, adjust a time for receiving each data packet based on the adjusting difference value, and obtain a recovered clock according to an adjusted data packet sequence.

Furthermore, the receiving terminal 202 is further used to count the number of pieces of received identification information till a second counting value a2, count the number of time periods between the received a2 pieces of identification information using the sampling clock of the receiving terminal to obtain a third counting value a3, and calculate the proportionality coefficient between the sampling clock of the transmitting terminal and the sampling clock of the receiving terminal according to a3/[a1* (a2-1)].

Furthermore, the receiving terminal 202 is further used to count the time periods among the received a2 pieces of identification information with the sampling clock of the receiving terminal for through a first counter with a maximum counting value of a2 and a second counter for recording the number of the first counters.

Furthermore, the receiving terminal 202 is further used to recover the interval between two adjacent identifiers according to the sampling clock period, the proportionality coefficient and the first counting value a1.

Furthermore, the receiving terminal 202 is further used to recover the interval between two adjacent identifiers according to an average value obtained after multiple calculations for the proportionality coefficient.

Furthermore, the transmitting terminal 201 is further used to, if the data packet transmitting period of the transmitting terminal is adjusted, and the time for transmitting the identification information is superposed with the time for transmitting the data packets, stop inserting identification information at this position, and re-detect the beginning position of the identification information and the data packet transmitting period at this moment.

Furthermore, the receiving terminal 202 is further used to calculate the proportionality coefficient according to identification information received after receiving identification information and before receiving data packets twice continuously.

Furthermore, the receiving terminal 202 is further used to receive the first counting value a1 which is inserted into the data packet transmitting interval as the identification information.

Obviusly, a person having ordinary skill in the art can make various modifications and transformations to the present invention. Such, if these modifications and transformations of the present invention belong to the scope of the claims of the present invention, the present invention is also intended to include these modifications and transformations.

## Claims

1. A method for clock recovery used in a packet-switched network, which comprises the following steps of:
a transmitting terminal performing counting on Time Division Multiplexing, TDM, service data packet transmitting periods using a sampling clock of the transmitting terminal to obtain a first counting value a1 (101), wherein the data packet transmitting period comprises a time for transmitting a data packet and a data packet transmitting interval;
the transmitting terminal inserting identification information between at least two continuous data packet transmitting intervals (102), wherein a ratio of an inserting interval of two pieces of adjacent identification information to the sampling clock of the transmitting terminal is the first counting value a1, wherein the first counting value a1 acts as the identification information;
a receiving terminal receiving the first counting value a1, calculating a proportionality coefficient between a sampling clock period of the transmitting terminal and a sampling clock period of the receiving terminal according to the first counting value a1 and the identification information, and recovering the inserting interval between the two pieces of adjacent identification information (103);
the receiving terminal comparing an interval between the two pieces of received adjacent identification information with the recovered inserting interval between the two pieces of adjacent identification information to obtain an adjusting difference value, adjusting a time for receiving each data packet based on the adjusting difference value, and obtaining a recovered clock according to an adjusted data packet sequence (104);
**characterized in that**,
if the data packet transmitting period of the transmitting terminal is adjusted, and time for transmitting the identification information is superposed with time for transmitting the data packet, the transmitting terminal stopping inserting identification information, and a beginning position of the identification information and a data packet transmitting period at this moment are re-detected.

2. The method according to claim 1, wherein, the step of the receiving terminal calculating a proportionality coefficient between a sampling clock period of the transmitting terminal and a sampling clock period of the receiving terminal according to the received first counting value a1 and the identification information is specifically:
the receiving terminal counting pieces of received identification information till a second counting value a2, and counting time period of all of two adjacent pieces among the received a2 pieces of identification information using the sampling clock of the receiving terminal to obtain a third counting value a3;
the receiving terminal calculating the proportionality coefficient between the sampling clock period of the transmitting terminal and the sampling clock period of the receiving terminal according to a3/[a1* (a2-1)].

3. The method according to claim 2, wherein, the step of counting time period of all of two adjacent pieces among the received a2 pieces of identification information using the sampling clock of the receiving terminal comprises:
counting the time period of all of two adjacent pieces among the received a2 pieces of identification information with the sampling clock of the receiving terminal by using a first counter with a maximum counting value of a1 and a second counter for recording a number of the first counter counting to a1.

4. The method according to claim 1, wherein, the receiving terminal recovers the inserting interval between the two pieces of adjacent identification information according to its sampling
clock period, the proportionality coefficient and the first counting value a1.

5. The method according to claim 4, wherein, the proportionality coefficient is an average value of proportionality coefficients obtained after a plurality of calculations for proportionality coefficient, and the inserting interval between two adjacent pieces of identification information is recovered according to the average value of the proportionality coefficients.

6. The method according to claim 5, wherein, the receiving terminal calculates the proportionality coefficient according to identification information received after receiving identification information and when receiving two data packets continuously.

7. The method according to claim 1, wherein, the step of the receiving terminal receiving the first counting value a1 comprises:
the receiving terminal receiving the first counting value a1 which is inserted into the data packets transmitting interval as the identification information.

8. A system for clock recovery in a packet-switched network, comprising:
a transmitting terminal (202), comprising means to perform counting on TDM service data packet transmitting periods using a sampling clock of the transmitting terminal to obtain a first counting value a1, wherein the data packet transmitting period comprises a time for transmitting a data packet and a data packet transmitting interval; and insert identification information between at least two continuous data packet transmitting intervals, wherein a ratio of an inserting interval of two pieces of adjacent identification information to the sampling clock of the transmitting terminal (202) is the first counting value a1, wherein, the first counting value a1 acts as the identification information;
a receiving terminal (201), comprising means to receive the first counting value a1, calculate a proportionality coefficient between a sampling clock period of the transmitting terminal (202) and a sampling clock period of the receiving terminal (201) according to the first counting value a1 and the identification information, and recover the inserting interval between the two pieces of adjacent identification information, compare an interval between the two pieces of received adjacent identification information with the recovered inserting interval between the two pieces of adjacent identification information to obtain an adjusting difference value, adjust a time for receiving each data packet based on the adjusting difference value, and obtain a recovered clock according to an adjusted data packet sequence;
**characterized in that**,
if the data packet transmitting period of the transmitting terminal (202) is adjusted, and time for transmitting the identification information is superposed with time for transmitting the data packet, the transmitting terminal (202) stops inserting identification information, and re-detects a beginning position of the identification information and a data packet transmitting period at this moment.

9. The system according to claim 8, wherein, the receiving terminal (201) is further used to count pieces of received identification information till a second counting value a2, count time period of all of two adjacent pieces among the received a2 pieces of identification information using the sampling clock of the receiving terminal (201) to obtain a third counting value a3, and calculate the proportionality coefficient between the sampling clock period of the transmitting terminal (202) and the sampling clock period of the receiving terminal (201) according to a3/[a1* (a2-1)].

10. The system according to claim 9, wherein, the receiving terminal (201) is further used to count the time period of all of two adjacent pieces among the received a2 pieces of identification information with the sampling clock of the receiving terminal (201) by using a first counter with a maximum counting value of a1 and a second counter for recording a number of the first counters counter counting to a1.

11. The system according to claim 8, wherein, the receiving terminal (201) is further used to recover the inserting interval between the two adjacent identifiers according to the sampling clock period, the proportionality coefficient and the first counting value a1, the proportionality coefficient is an average value of proportionality coefficients obtained after a plurality of calculations for the proportionality coefficient, and the receiving terminal (201) recovers the inserting interval between two adjacent pieces of identification information according to the average value of the proportionality coefficients.

12. The system according to claim 11, wherein, the receiving terminal (201) is further used to calculate the proportionality coefficient according to identification information received after receiving identification information and when receiving two data packets continuously.

13. The system according to claim 8, wherein, the receiving terminal (201) is further used to receive the first counting value a1 which is inserted into the data packet transmitting interval as the identification information.

## Patentansprüche

1. Verfahren zur Taktrückgewinnung zur Verwendung in einem paketvermittelten Netzwerk, mit den folgenden Schritten:
durch ein sendendes Endgerät, Zählen von Datenpaketübertragungsperioden eines Zeitmultiplex-, TDM, -dienstes unter Verwendung eines Abtasttaktes des sendenden Endgeräts, um einen ersten Zählwert a1 (101) zu erhalten, wobei die Datenpaketübertragungsperiode eine Zeitspanne für die Übertragung eines Datenpakets und ein Datenpaketübertragungsintemall enthält;
durch das sendende Endgerät, Einfügen von Identifikationsinformation zwischen wenigstens zwei aufeinanderfolgende Datenpaketübertragungsintervalle (102), wobei ein Verhältnis eines zwischen zwei aufeinanderfolgenden Identifikationsinformationseinheiten liegenden Einfügeintervalls zu dem Abtasttakt des sendenden Endgeräts den ersten Zählwert a1 darstellt, wobei der erste Zählwert a1 als die Identifikationsinformation fungiert;
durch ein empfangendes Endgerät, Empfangen des ersten Zählwerts a1, Berechnen eines Proportionalitätskoeffizienten zwischen einer Abtasttaktperiode des sendenden Endgeräts und einer Abtasttaktperiode des empfangenden Endgeräts gemäß dem ersten Zählwert a1 und der Identifikationsinformation, und Rückgewinnen des Einfügeintervalls zwischen den zwei aufeinanderfolgenden Identifikationsinformationseinheiten (103);
durch das empfangende Endgerät, Vergleichen eines Intervalls zwischen den beiden empfangenen aufeinanderfolgenden Identifikationsinformationseinheiten mit dem rückgewonnenen Einfügeintervall zwischen den beiden aufeinanderfolgenden Identifikationsinformationen, um einen Anpassungsdifferenzwert zu erhalten, Anpassen,
für den Empfang jedes Datenpakets, einer jeweiligen Empfangszeit basierend auf dem Anpassungsdifferenzwert, und Erhalten eines rückgewonnenen Taktes gemäß einer angepassten Datenpaketsequenz (104);
**dadurch gekennzeichnet, dass**
Falls die Datenpaketübertragungsperiode des sendenden Endgeräts angepasst wird und eine Zeitspanne zur Übertragung der Identifikationsinformation mit einer Zeitspanne zum Senden des Datenpakets überlappt, Stoppen, durch das sendende Endgerät, des Einfügens von Identifikationsinformation und zu diesem Zeitpunkt erneutes Detektieren einer Startposition für die Identifikationsinformation und einer Datenpaketübertragungsperiode.

2. Verfahren gemäß Anspruch 1, wobei der Schritt, bei dem das empfangende Endgerät einen Proportionalitätskoeffizienten zwischen einer Abtasttaktperiode des sendenden Endgeräts und einer Abtasttaktperiode des empfangenden Endgeräts gemäß dem empfangenen ersten Zählwert a1 und der Identifikationsinformation berechnet, speziell darin besteht, dass:
das empfangende Endgerät die empfangenen Identifikationsinformationseinheiten bis hin zu einem zweiten Zählwert a2 zählt und die Zeitperioden sämtlicher der jeweils zwei aufeinanderfolgenden Einheiten unter den empfangenen a2 Identifikationsinformationseinheiten unter Verwendung des Abtastakts des empfangenden Endgeräts zählt, um einen dritten Zählwert a3 zu erhalten;
das empfangende Endgerät den Proportionalitätskoeffizienten zwischen der Abtastratenperiode des sendenden Endgeräts und der Abtastratenperiode des empfangenden Endgeräts gemäß a3/[a1 * (a2 - 1)] berechnet.

3. Verfahren gemäß Anspruch 2, wobei der Schritt, des Zählens der Zeitperioden sämtlicher der jeweils zwei aufeinanderfolgenden Einheiten unter den empfangenen a2 Identifikationsinformationseinheiten unter Verwendung des Abtastakts des empfangenden Endgeräts aufweist:
Zählen der Zeitperioden sämtlicher der jeweils zwei aufeinanderfolgenden Einheiten unter den empfangenen a2 Identifikationsinformationseinheiten mit dem Abtasttakt des empfangenden Endgeräts unter Verwendung eines ersten Zählers, der einen maximalen Zählwert a1 aufweist, und eines zweiten Zählers zum Erfassen einer Anzahl der Zählungen des ersten Zählers bis jeweils a1.

4. Verfahren gemäß Anspruch 1, wobei das empfangende Endgerät das Einfügeintervall zwischen den beiden aufeinanderfolgenden Identifikationsinformationseinheiten gemäß seiner Abtastratenperiode, dem Proportionalitätskoeffizienten und dem ersten Zählwert a1 rückgewinnt.

5. Verfahren gemäß Anspruch 4, wobei der Proportionalitätskoeffizient ein Mittelwert der Proportionalitätskoeffizienten ist, die nach einer Mehrzahl von Proportionalitätskoeffizientenberechnungen erhalten werden, und das Einfügeintervall zwischen zwei aufeinanderfolgenden Identifikationsinformationseinheiten gemäß dem Mittelwert der Proportionalitätskoeffizienten rückgewonnen wird.

6. Verfahren gemäß Anspruch 5, wobei das empfangende Endgerät den Proportionalitätskoeffizienten gemäß der empfangenen Identifikationsinformation berechnet, nachdem die Identifikationsinformation empfangen wurde und wenn zwei aufeinanderfolgende Datenpakete empfangen werden.

7. Verfahren gemäß Anspruch 1, wobei der Schritt, bei dem das empfangende Endgerät den ersten Zählwert a1 empfängt, aufweist:
Empfangen, durch das empfangende Endgerät, des ersten Zählwerts a1, der in das Datenpaketübertragungsintervall als Identifikationsinformation eingefügt ist.

8. System zur Taktrückgewinnung in einem paketvermittelten Netzwerk, aufweisend:
Ein sendendes Endgerät (202), welches Mittel aufweist zum Ausführen einer Zählung von TDM-Dienst-Datenpaketübertragungsperioden aufweist unter Verwendung eines Abtasttakts des sendenden Endgeräts, um einen ersten Zählwert a1 zu erhalten, wobei die Datenpaketübertragungsperiode eine Zeitspanne zum Übertragen eines Datenpakets und ein Datenpaketübertragungsintervall aufweist; und zum Einfügen von Identifikationsinformation zwischen wenigstens zwei aufeinanderfolgende Datenpaketübertragungsintervalle, wobei ein Verhältnis eines zwischen zwei aufeinanderfolgenden Identifikationsinformationseinheiten liegenden Einfügeintervalls zu dem Abtasttakt des sendenden Endgeräts den ersten Zählwert a1 darstellt, wobei der erste Zählwert a1 als die Identifikationsinformation fungiert;
Ein empfangendes Endgerät (201) mit Mitteln zum Empfangen des ersten Zählwerts a1, zum Berechnen eines Proportionalitätskoeffizienten zwischen einer Abtasttaktperiode des sendenden Endgeräts (202) und einer Abtasttaktperiode des empfangenden Endgeräts (201) gemäß dem ersten Zählwert a1 und der Identifikationsinformation, und zum Rückgewinnen des Einfügeintervalls zwischen den zwei aufeinanderfolgenden Identifikationsinformationseinheiten, zum Vergleichen eines Intervalls zwischen den beiden empfangenen aufeinanderfolgenden Identifikationsinformationseinheiten mit dem rückgewonnenen Einfügeintervall zwischen den beiden aufeinanderfolgenden Identifikationsinformationen, um einen Anpassungsdifferenzwert zu erhalten, zum Anpassen, für den Empfang jedes Datenpakets, einer jeweiligen Empfangszeit basierend auf dem Anpassungsdifferenzwert, und Erhalten eines rückgewonnenen Taktes gemäß einer angepassten Datenpaketsequenz;
**dadurch gekennzeichnet, dass**
Falls die Datenpaketübertragungsperiode des sendenden Endgeräts (202) angepasst wird und eine Zeitspanne zur Übertragung der Identifikationsinformation mit einer Zeitspanne zum Senden des Datenpakets überlappt, das sendende Endgerät (202) das Einfügen von Identifikationsinformation stoppt und zu diesem Zeitpunkt erneut eine Startposition für die Identifikationsinformation und eine Datenpaketübertragungsperiode detektiert.

9. System gemäß Anspruch 8, wobei das empfangende Endgerät (201) des Weiteren dazu vorgesehen ist, die empfangenen Identifikationsinformationseinheiten bis hin zu einem zweiten Zählwert a2 zu zählen, die Zeitperioden sämtlicher der jeweils zwei aufeinanderfolgenden Einheiten unter den empfangenen a2 Identifikationsinformationseinheiten unter Verwendung des Abtastakts des empfangenden Endgeräts (201) zu zählen, um einen dritten Zählwert a3 zu erhalten, und den Proportionalitätskoeffizienten zwischen der Abtastratenperiode des sendenden Endgeräts (202) und der Abtastratenperiode des empfangenden Endgeräts (201) gemäß a3/[a1 * (a2 - 1)] zu berechnen.

10. System gemäß Anspruch 9, wobei das empfangende Endgerät (201) des Weiteren dazu vorgesehen ist, die Zeitperioden sämtlicher der jeweils zwei aufeinanderfolgenden Einheiten unter den empfangenen a2 Identifikationsinformationseinheiten mit dem Abtasttakt des empfangenden Endgeräts (201) unter Verwendung eines ersten Zählers zu zählen, der einen maximalen Zählwert a1 aufweist, und eines zweiten Zählers zum Erfassen einer Anzahl der Zählungen des ersten Zählers bis jeweils a1.

11. System gemäß Anspruch 8, wobei das empfangende Endgerät (201) des Weiteren dazu vorgesehen ist, das Einfügeintervall zwischen den beiden aufeinanderfolgenden Identifikationsinformationseinheiten gemäß der Abtastratenperiode, dem Proportionalitätskoeffizienten und dem ersten Zählwert a1 rückzugewinnen, wobei der Proportionalitätskoeffizient ein Mittelwert der Proportionalitätskoeffizienten ist, die nach einer Mehrzahl von Proportionalitätskoeffizientenberechnungen erhalten werden, und das empfangende Endgerät (201) das Einfügeintervall zwischen zwei aufeinanderfolgenden Identifikationsinformationseinheiten gemäß dem Mittelwert der Proportionalitätskoeffizienten rückgewinnt.

12. System gemäß Anspruch 11, wobei das empfangende Endgerät (201) des Weiteren dazu vorgesehen ist, den Proportionalitätskoeffizienten gemäß der empfangenen Identifikationsinformation zu berechnen, nachdem die Identifikationsinformation empfangen wurde und wenn zwei aufeinanderfolgende Datenpakete empfangen werden.

13. System gemäß Anspruch 8, wobei das empfangende Endgerät (201) des Weiteren dazu vorgesehen ist, den ersten Zählwert a1 zu empfangen, der in das Datenpaketübertragungsintervall als die Identifikationsinformation eingefügt ist.

## Revendications

1. Procédé pour une récupération d'horloge utilisé dans un réseau à commutation de paquets, qui comprend les étapes suivantes :
un terminal de transmission effectuant le comptage des périodes de transmission de paquets de données de service à multiplexage par répartition dans le temps, TDM, en utilisant une horloge d'échantillonnage du terminal de transmission pour obtenir une première valeur de comptage a1 (101), dans lequel la période de transmission de paquets de données comprend un temps pour transmettre un paquet de données et un intervalle de transmissions de paquets de données ;
le terminal de transmission insérant des informations d'identification entre au moins deux intervalles de transmission de paquets de données continus (102), dans lequel un rapport d'un intervalle d'insertion de deux éléments d'informations d'identification adjacents sur l'horloge d'échantillonnage du terminal de transmission est la première valeur de comptage a1, dans lequel la première valeur de comptage a1 sert d'informations d'identification ;
un terminal de réception recevant la première valeur de comptage a1, calculant un coefficient de proportionnalité entre une période d'horloge d'échantillonnage du terminal de transmission et une période d'horloge d'échantillonnage du terminal de réception en fonction de la première valeur de comptage a1 et des informations d'identification, et récupérant l'intervalle d'insertion entre les deux éléments d'informations d'identification adjacents (103) ;
le terminal de réception comparant un intervalle entre les deux éléments d'informations d'identification adjacents reçus à l'intervalle d'insertion récupéré entre les deux éléments d'informations d'identification adjacents afin d'obtenir une valeur de différence d'ajustement, ajustant un temps pour recevoir chaque paquet de données sur la base de la valeur de différence d'ajustement et obtenant une horloge récupérée en fonction d'une séquence de paquets de données ajustés (104) ;
**caractérisé en ce que**,
si la période de transmission de paquets de données du terminal de transmission est ajustée, et si le temps pour transmettre les informations d'identification est superposé sur le temps pour transmettre le paquet de données, le terminal de transmission arrête d'insérer des informations d'identification, et une position de début des informations d'identification et une période de transmission de paquets de données sont re-détectées.

2. Procédé selon la revendication 1, dans lequel, l'étape du terminal de réception calculant un coefficient de proportionnalité entre une période d'horloge d'échantillonnage du terminal de transmission et une période d'horloge d'échantillonnage du terminal de réception en fonction de la première valeur de comptage reçue a1 et des informations d'identification est spécifiquement :
le terminal de réception comptant des éléments d'informations d'identification reçus jusqu'à une deuxième valeur de comptage a2, et comptant la période de temps de la totalité de deux éléments adjacents parmi les éléments d'informations d'identification a2 reçus en utilisant l'horloge d'échantillonnage du terminal de réception pour obtenir une troisième valeur de comptage a3 ;
le terminal de réception calculant le coefficient de proportionnalité entre la période d'horloge d'échantillonnage du terminal de transmission et la période d'horloge d'échantillonnage du terminal de réception en fonction de a3/[a1* (a2-1)].

3. Procédé selon la revendication 2, dans lequel, l'étape de comptage de la période de temps de la totalité de deux éléments adjacents parmi les éléments d'informations d'identification a2 reçus en utilisant l'horloge d'échantillonnage du terminal de réception comprend :
le comptage de la période de temps de la totalité de deux éléments adjacents parmi les éléments d'informations d'identification a2 reçus avec l'horloge d'échantillonnage du terminal de réception en utilisant un premier compteur avec une valeur de comptage maximale de a1 et un deuxième compteur pour enregistrer un nombre du premier compteur comptant jusqu'à a1.

4. Procédé selon la revendication 1, dans lequel, le terminal de réception récupère l'intervalle d'insertion entre les deux éléments d'informations d'identification adjacents en fonction de sa période d'horloge d'échantillonnage, du coefficient de proportionnalité et de la première valeur de comptage a1.

5. Procédé selon la revendication 4, dans lequel, le coefficient de proportionnalité est une valeur moyenne de coefficients de proportionnalité obtenue après une pluralité de calculs de coefficient de proportionnalité, et l'intervalle d'insertion entre deux éléments d'informations d'identification adjacents est récupéré en fonction de la valeur moyenne des coefficients de proportionnalité.

6. Procédé selon la revendication 5, dans lequel, le terminal de réception calcule le coefficient de proportionnalité en fonction d'informations d'identification reçues après réception d'informations d'identification et lors de la réception de deux paquets de données en continu.

7. Procédé selon la revendication 1, dans lequel, l'étape du terminal de réception recevant la première valeur de comptage a1 comprend :
le terminal de réception recevant la première valeur de comptage a1 qui est insérée dans l'intervalle de transmission de paquets de données comme informations d'identification.

8. Système pour une récupération d'horloge dans un réseau à commutation de paquets, comprenant :
un terminal de transmission (202), comprenant un moyen pour effectuer le comptage des périodes de transmission de paquets de données de service TDM en utilisant une horloge d'échantillonnage du terminal de transmission pour obtenir une première valeur de comptage a1, dans lequel la période de transmission de paquets de données comprend un temps pour transmettre un paquets de données et un intervalle de transmission de paquets de données ; et pour insérer des informations d'identification entre au moins deux intervalles de transmission de paquets de données continus, dans lequel un rapport d'un intervalle d'insertion de deux éléments d'informations d'identification adjacents sur l'horloge d'échantillonnage du terminal de transmission (202) est la première valeur de comptage a1, dans lequel la première valeur de comptage a1 sert d'informations d'identification ;
un terminal de réception (201), comprenant un moyen pour recevoir la première valeur de comptage a1, pour calculer un coefficient de proportionnalité entre une période d'horloge d'échantillonnage du terminal de transmission (202) et une période d'horloge d'échantillonnage du terminal de réception (201) en fonction de la première valeur de comptage a1 et des informations d'identification, et pour récupérer l'intervalle d'insertion entre les deux éléments d'informations d'identification adjacents, pour comparer un intervalle entre les deux éléments d'informations d'identification adjacents reçus à l'intervalle d'insertion récupéré entre les deux éléments d'informations d'identification adjacents afin d'obtenir une valeur de différence d'ajustement, d'ajuster un temps pour recevoir chaque paquet de données sur la base de la valeur de différence d'ajustement et d'obtenir une horloge récupérée en fonction d'une séquence de paquets de données ajustés ;
**caractérisé en ce que**,
si la période de transmission de paquets de données du terminal de transmission (202) est ajustée, et si le temps pour transmettre les informations d'identification est superposé sur le temps pour transmettre le paquet de données, le terminal de transmission (202) arrête d'insérer des informations d'identification, et re-détecte une position de début des informations d'identification et une période de transmission de paquets de données à ce moment.

9. Système selon la revendication 8, dans lequel, le terminal de réception (201) est en outre utilisé pour compter les éléments d'informations d'identification reçus jusqu'à une deuxième valeur de comptage a2, pour compter la période de temps de la totalité de deux éléments adjacents parmi les éléments d'informations d'identification a2 reçus en utilisant l'horloge d'échantillonnage du terminal de réception (201) pour obtenir une troisième valeur de comptage a3, et pour calculer le coefficient de proportionnalité entre la période d'horloge d'échantillonnage du terminal de transmission (202) et la période d'horloge d'échantillonnage du terminal de réception (201) en fonction de a3/[a1* (a2-1)].

10. Système selon la revendication 9, dans lequel, le terminal de réception (201) est en outre utilisé pour compter la période de la période de temps de la totalité de deux éléments adjacents parmi les éléments d'informations d'identification a2 reçus avec l'horloge d'échantillonnage du terminal de réception (201) en utilisant un premier compteur avec une valeur de comptage maximale de a1 et un deuxième compteur pour enregistrer un nombre du premier compteur comptant jusqu'à a1.

11. Système selon la revendication 8, dans lequel, le terminal de réception (201) est en outre utilisé pour récupérer l'intervalle d'insertion entre les deux identifiants adjacents en fonction de la période d'horloge d'échantillonnage, du coefficient de proportionnalité et de la première valeur de comptage a1, le coefficient de proportionnalité est une valeur moyenne de coefficients de proportionnalité obtenue après une pluralité de calculs du coefficient de proportionnalité, et le terminal de réception (201) récupère l'intervalle d'insertion entre deux éléments d'informations d'identification adjacents en fonction de la valeur moyenne des coefficients de proportionnalité.

12. Système selon la revendication 11, dans lequel, le terminal de réception (201) est en outre utilisé pour calculer le coefficient de proportionnalité en fonction d'informations d'identification reçues après réception des informations d'identification et lors de la réception de deux paquets de données en continu.

13. Système selon la revendication 8, dans lequel, le terminal de réception (201) est en outre utilisé pour recevoir la première valeur de comptage a1 qui est insérée dans l'intervalle de transmission de paquets de données comme informations d'identification.
